(19) Europäisches Patentamt
European Patent Office
Office européen des brevets

(11) **EP 2 242 122 B1**

(12) **EUROPÄISCHE PATENTSCHRIFT**

(45) Veröffentlichungstag und Bekanntmachung des Hinweises auf die Patenterteilung:
**02.12.2015 Patentblatt 2015/49**

(51) Int Cl.:
*H02N 2/02* *(2006.01)*      *H02N 2/06* *(2006.01)*

(21) Anmeldenummer: **10159339.0**

(22) Anmeldetag: **08.04.2010**

(54) **Betriebsverfahren und Ansteuereinrichtung eines Piezolinearantriebes**

Operating method and control unit of a linear piezo drive

Procédé d'opération et dispositif de commande d'un entraînement linéaire piézoélectrique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **16.04.2009 DE 102009017637**

(43) Veröffentlichungstag der Anmeldung:
**20.10.2010 Patentblatt 2010/42**

(73) Patentinhaber: **Physik Instrumente (PI) GmbH & Co. KG**
**76228 Karlsruhe (DE)**

(72) Erfinder: **Mock, Christopher**
**76337 Waldbronn (DE)**

(74) Vertreter: **Meissner, Bolte & Partner GbR**
**Widenmayerstrasse 47**
**80538 München (DE)**

(56) Entgegenhaltungen:
**EP-A2- 1 548 855      US-A- 5 268 621**

• **EGASHIRA Y ET AL: "SUB-NANOMETER RESOLUTION ULTRASONIC MOTOR FOR 300 NM WAFER LITHOGRAPHY PRECISION STAGE", JAPANESE JOURNAL OF APPLIED PHYSICS, JAPAN SOCIETY OF APPLIED PHYSICS, JP, Bd. 41, Nr. 9, PART 01, 1. September 2002 (2002-09-01), Seiten 5858-5863, XP001163829, ISSN: 0021-4922, DOI: 10.1143/JJAP.41.5858**

EP 2 242 122 B1

**Beschreibung**

Die Erfindung betrifft ein Betriebsverfahren eines Piezolinearantriebes mit einer Gruppe von Piezostapelaktoren, wobei benachbarte Aktoren der Gruppe zu abwechselnden Klemm- und Vorschubbewegungen angesteuert werden, sowie eine Betriebssteuereinheit zur Realisierung dieses Verfahrens.

Piezoantriebe haben in den letzten Jahrzehnten breite Anwendung in verschiedensten Gebieten der Technik gefunden, insbesondere zur Mikro- und Nanopositionierung von Komponenten optischer Anordnungen oder von Systemen der Präzisionsmechanik.

Bei piezoelektrischen Antrieben wird elektrische Energie in Bewegung umgesetzt, indem der elektrostriktive Effekt eines oder mehrerer piezoelektrischer Elemente ausgenutzt wird. Bei einem piezoelektrischen Antrieb, der den longitidunalen Elektrostriktionseffekt ausnutzt, ist der Betrag der Verschiebung pro Einheitslänge des Aktors im Wesentlichen proportional der Intensität des angelegten Feldes. Für eine hohe Auslenkung ist es notwendig, eine große Spannung zwischen den im Regelfall gegenüberliegenden Elektroden anzulegen, oder es muss der Abstand zwischen den Elektroden verringert werden.

Zur Verstärkung des piezoelektrischen Effektes wurden monolithische Vielschichtaktoren entwickelt, die aus einem gesinterten Stapel dünner Folien aus Piezokeramik, z.B. Bleizirkonattitanat mit eingelagerten metallischen Innenelektroden, bestehen. Die Innenelektroden sind wechselseitig aus dem Stapel herausgeführt und über Außenelektroden elektrisch verschalten. Legt man eine elektrische Spannung an die Außenelektroden an, so dehnen sich die Piezofolien in Feldrichtung aus. Durch die mechanische Serienschaltung der einzelnen Piezofolien wird die Nenndehnung der gesamten Piezokeramik schon bei geringeren elektrischen Spannungen erreicht. Derartige Vielschichtaktoren sind beispielsweise aus der DE 4 036 287 C2 bekannt.

Aus der US 6 150 750 A ist ein piezolelektrischer Linear-Schrittmotor bekannt, welcher Aktoren aufweist, die eine auf einem gemeinsamen Substrat befindliche Hybridanordnung darstellen. Innerhalb einer zylindrischen Stapelanordnung ist ein erstes Stapelteil als Longitudinal- und ein zweites Stapelteil als Scheraktor ausgebildet. Die verwendeten monolithischen Keramiken mit Isolationsschicht erfordern relativ hohe Betriebsspannungen, mit der Folge eines reduzierten Gesamtwirkungsgrades.

Aus der US 5 241 235 A ist ein Aktorstapel vorbekannt, welcher Bewegungen in Stapelrichtung sowie in zwei dazu senkrechte Richtungen ausführen kann. Zum weiteren Stand der Technik, betreffend piezoelektrische oder elektrostriktive Aktuatoren, auch zur Verwendung in Schritt-Antrieben, wird auf die DE 693 02 084 T2, die DE 198 06 127 A1 und die DE 196 05 214 A1 hingewiesen.

Die DE 101 48 267 B4 der Anmelderin beschreibt einen verbesserten Piezolinearantrieb mit einer Gruppe von Piezostapelaktoren sowie ein Betriebsverfahren eines solchen Antriebes. Ein solcher Antrieb ist in der Lage, in kurzer Zeit große Stellwege zu realisieren und zugleich in der Nähe des Zielpunktes eine höchst präzise Positionierung des zu positionierenden Objektes mit großer Haltekraft zu bieten.

Typischerweise wird ein solcher Piezoantrieb aufgrund eines Positionssignals als Steuersignal angesteuert. Es hat sich aber gezeigt, dass dies unter bestimmten Bedingungen, etwa bei der Feinpositionierung eines relativ schweren Objektes in vertikaler Richtung oder mit einer vertikalen Bewegungskomponente, zu systematischen Positionierfehlern führen kann. Diese lassen sich zwar korrigieren, jedoch erfordert dies zusätzlichen Steuerungsaufwand und kann das zeitliche Ansprechverhalten verschlechtern. Zudem können bei einer positionssignalabhängigen Steuerung über längere Zeiträume an den Longitudinalaktoren anliegende hohe Klemmspannungen eine Verschlechterung der Funktionsfähigkeit des Antriebes bewirken.

Der Aufsatz von Y. Egashira in Jpn. J. Appl. Phys. Bd. 41 (2002), Teil 1, Nr. 9, Seiten 5858-5863 offenbart einen nicht-resonanten Ultraschallmotor für langsame und schnelle Bewegungen eines Positioniertisches.

Der Erfindung liegt daher die Aufgabe zugrunde, ein verbessertes Betriebsverfahren für einen Piezolinearantrieb der oben erläuterten Art sowie eine entsprechende Betriebssteuereinheit bereitzustellen.

Diese Aufgabe wird in ihrem Verfahrensaspekt durch ein Betriebsverfahren mit den Merkmalen des Anspruchs 1 und in ihrem Vorrichtungsaspekt durch eine Betriebssteuereinheit mit den Merkmalen des Anspruchs 5 gelöst. Zweckmäßige Ausgestaltungen sind Gegenstand der abhängigen Ansprüche.

Mit der erfindungsgemäßen Lösung, die die Ableitung von Ansteuersignalen des Antriebes aus einer Geschwindigkeits-proportionalen Steuergröße vorsieht, lassen sich hohe permanente Spannungsbelastungen und damit verbundene Degradationserscheinungen in den Aktoren ebenso vermindern wie Verluste in den Ansteuerverstärkern. Für bestimmte Anwendungen, etwa die weiter oben erwähnten Vertikalpositionierungen, lässt sich eine größere Positionsgenauigkeit, bezogen auf den Steuerungsaufwand, und ein besseres Ansprechverhalten realisieren. Das Verfahren ist im Übrigen robust gegenüber Integration in einen Positionsregelkreis.

In einer Ausgestaltung ist vorgesehen, dass Werte einer Stellgröße derart abgeleitet werden, dass die Zeitabhängigkeit des Antriebsweges einem linearen Verlauf angenähert wird. Entsprechend sind die Berechnungsmittel in der vorgeschlagenen Betriebssteuereinheit zur Ableitung der Werte einer Stellgröße derart ausgebildet, dass die Zeitabhängigkeit des Antriebsweges einem linearen Verlauf angenähert wird.

Erfindungsgemäß ist vorgesehen, dass die Zykluszeit eines Scher- und Klemmspannungszyklus und eine maximale Scherspannung zur Ansteuerung der Longitudinalaktoren in Abstimmung aufeinander als Stellgrößen aus der Steuergröße abgeleitet werden und die Berechnungsmittel der Betriebssteuereinheit entsprechend ausgebildet sind.

In einer weiteren Ausgestaltung des erfindungsgemäßen Verfahrens wird für jeden Schritt eine maximale Zykluszeit vorgegeben.

Eine weitere Ausführung der Erfindung sieht vor, dass jeweils ein vorbestimmter und in einem Lookup-Table gespeicherter Wert ausgelesen und benutzt oder ein aus zwei ausgelesenen Werten interpolierter Wert der Scherspannung zur Ansteuerung der Longitudinalaktoren benutzt wird, und die entsprechende Betriebssteuereinheit umfasst einen entsprechenden Lookup-Table als speziellen Datenspeicherbereich. In einer Ausgestaltung dieser Ausführung ist neben dem Lookup-Table eine Interpolationseinheit zur Bestimmung interpolierter Scherspannungswerte aus den vorbestimmten und im Lookup-Table gespeicherten Werten vorgesehen, die jeweils für die Endpunkte eines Sampling-Intervalls gelten.

Vorteile und Zweckmäßigkeiten der Erfindung ergeben sich im Übrigen aus der nachfolgenden detaillierteren Beschreibung anhand der Figuren. Von diesen zeigen:

Fig. 1 eine Prinzipskizze eines Piezolinearantriebes, der mit dem erfindungsgemäßen Betriebsverfahren betrieben werden kann,

Fig. 2 eine grafische Darstellung des Ansteuerspannungs- und Positionsverlaufes in einem Ansteuerzyklus des in Fig. 1 gezeigten Piezolinearantriebes,

Fig. 3 eine Prinzipskizze einer erfindungsgemäßen Betriebssteuereinheit und

Fig. 4 eine grafische Darstellung zur Erläuterung des Betriebes mit interpolierten Scherspannungswerten.

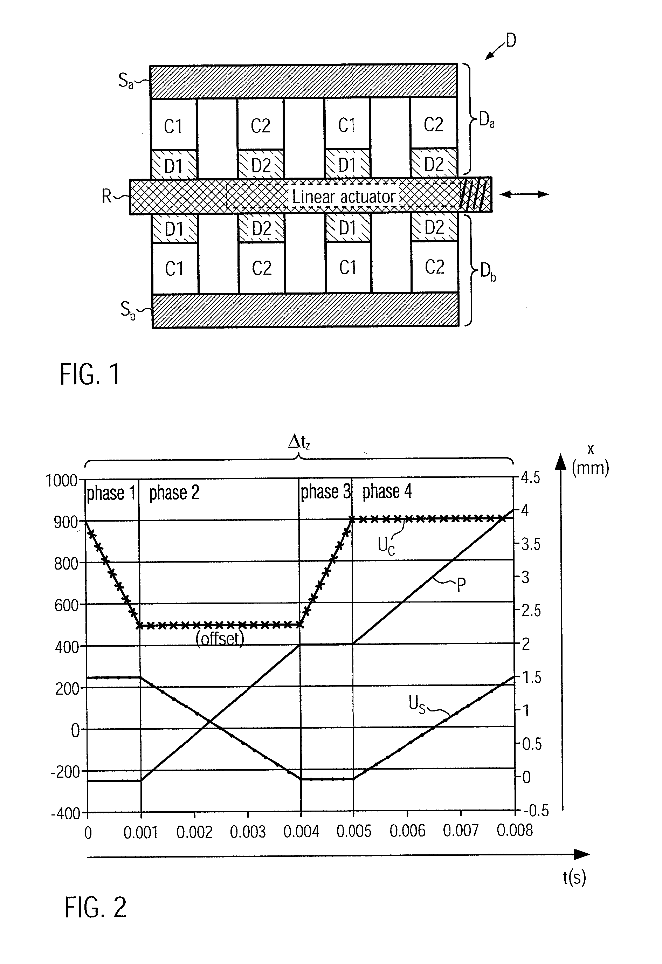

Fig. 1 zeigt schematisch in Art einer Längsschnittdarstellung einen Piezolinearantrieb D, der zwei Antriebsmodule Da und Db mit einem zwischen diesen eingeklemmten Läufer R umfasst. Der Läufer R wird durch entsprechend synchronisierte Ansteuerung der Antriebsmodule Da, Db in einem Schrittmodus in Richtung des Doppelpfeils bewegt. Das erste und zweite Antriebsmodul Da, Db umfassen jeweils ein Substrat Sa bzw. Sb, auf denen jeweils mehrere Piezo-Stapelanordnungen aus Scher- bzw. Longitudinalaktoren D1, D2 und Klemmaktoren C1, C2 angeordnet sind, wobei die Scheraktoren D1, D2 Klemm-Kontakt zum Läufer R herstellen. Es versteht sich, dass auf den Oberflächen bzw. an den Grenzflächen der jeweiligen Aktoren Elektroden zur elektrischen Ansteuerung vorgesehen sind; diese sind in der als Prinzipdarstellung zu verstehenden Fig. 1 nicht separat dargestellt.

Eine solche Anordnung wird auf die in der DE 101 48 267 B4 der Anmelderin genauer beschriebene Weise angesteuert, um im Schrittbetrieb abwechselnd Klemm- und Vorschubbewegungen auszuführen und den Läufer R hierdurch im Schrittmodus in der Vorschubrichtung anzutreiben. Das grundlegende Ansteuerprinzip ist nicht Gegenstand der vorliegenden Erfindung und wird daher hier nicht näher erläutert.

In Fig. 2 ist ein (an sich ebenfalls bekanntes) Ansteuerdiagramm eines derartigen Piezolinearantriebes dargestellt. Die Abszisse ist die Zeitachse, und auf einer linken Ordinate ist die Spannung U in Volt und auf einer rechten Ordinate eine Position x in Millimetern aufgetragen. Die einfach durchgezogene Kurve stellt die Position in Abhängigkeit von der Zeit dar, die mit Punkten versehene Kurve den zeitlichen Verlauf der Scherspannung, und die mit Kreuzen versehene Kurve den zeitlichen Verlauf einer Klemmspannung, wobei letztere im Interesse einer besseren Übersichtlichkeit mit einem Offset von 750 V eingetragen ist. Der reale Klemmspannungs-Mittelwert ist also Null.

Die Ansteuerung des in Rede stehenden Piezolinearantriebes erfordert also die Bereitstellung verschiedener Spannungssignale, nämlich der Klemm- und Scherspannungen, aufgrund einer Steuergröße (Eingangsgröße). Üblicherweise ist dies ein Positionssignal (Zielposition), wobei dem Antrieb ein Sensor zur Erfassung der IstPosition zugeordnet ist und das Sensorsignal zu einem Eingang der zugehörigen Betriebssteuereinheit rückgekoppelt wird und in der Nähe des Zielpunktes die Bereitstellung der Spannungssignale (Stellgrößen) in vorab festgelegter Weise beeinflusst. Die Verarbeitung des Positionssignals kann dabei insbesondere derart vorbestimmt sein, dass wahlweise eine sehr schnelle oder besonders "sanfte" Annäherung an die Zielposition (ohne wesentliches Überschwingen) erreicht wird. Auf gewisse Nachteile dieses Betriebssteuerprinzips wurde weiter oben hingewiesen.

Als Systemkonstanten werden nachfolgend eine durch die digitalen Grundbausteine festgelegte Samplingzeit Ta, die durch die Verstärkerkonstruktion bestimmten Maximalspannungen Umax der Verstärker, die durch die Modulkonstruktion und -vorspannung bestimmte maximale Wegstrecke $\Delta x_{s\_max}$ des Aktors während eines Zyklus $\Delta t_z$ mit der maximalen Scherspannung sowie eine minimale Zykluszeit $\Delta t_{z\_mm}$ und eine maximale Zykluszeit $\Delta t_{z\_max}$ angesehen. Während auch die minimale Zykluszeit durch physikalische Systemparameter, insbesondere der Verstärker, bestimmt ist, wird die maximale Zykluszeit für eine Implementierung Entwerferseitig festgelegt.

Das vorgeschlagene Steuerungsprinzip, das eine Bestimmung der Stellgrößen aufgrund einer geschwindingkeitsabhängigen Steuer- bzw. Eingangsgröße umfasst, schließt insbesondere die Variation zweier Variabler ein, und zwar einer aktuellen Zykluszeit $\Delta t_z$ und der Scherspannungsamplitude $U_s$.

Ein wesentliches Element der hier erläuterten Ausführung der Erfindung besteht darin, dass eine resultierende Geschwindigkeit des Läufers (Antriebsgeschwindigkeit) $v_r$ möglichst perfekt linear einer eingestellten Ziel-Geschwindigkeit $v_s$ folgt. Für die Berechnung der Stellgrößen gelten im Übrigen folgende Randbedingungen: Begrenzende Werte für $v_r$ sind die maximale Wegstrecke pro Zyklus $\Delta x_{s\_max}$ und die minimale Zykluszeit $\Delta t_{z\_min}$. Die tatsächliche Zykluszeit $\Delta t_z$ hat einen Variationsbereich von $\Delta t_{z\_min}$ bis $\Delta t_{z\_max}$. Die tatsächliche Schrittweite $\Delta x_s$ kann variieren von 0 bis $\Delta x_{s\_max}$. Folglich kann die tatsächliche (resultierende) Geschwindigkeit zwischen 0 und $\Delta x_{s\_max}/\Delta t_{z\_min}$ variieren.

Für die weitere Erläuterung der Berechnung der Stellgrößen werden die dimensionslosen Hilfsgrößen f und g eingeführt, und es gilt zunächst:

$$\Delta x_s(v_s) = f(v_s) \cdot x_{s\_max} \sim f(v_s) \cdot U_{s\_max} \qquad (1)$$

$$\Delta t_z(v_s) = g \cdot t_{z\_min} \qquad (2)$$

wobei gilt:

$$0 \leq f \leq 1 \qquad (1a)$$

$$\frac{t_{z\_max}}{t_{z\_min}} \geq g \geq 1 \qquad (2a)$$

Bei Einführung einer weiteren Hilfsgröße, nämlich einer virtuellen Geschwindigkeit v* ergibt sich der folgende Ansatz:

$$vr(v^*) = \frac{\Delta x_{s\_max} \cdot \dfrac{v^*}{v_{max}}}{\left[1 - \dfrac{v^*}{v_{max}}\right] \cdot (t_{z\_max} - t_{z\_min}) + t_{z\_min}} \qquad (3)$$

$$\Rightarrow v^*(v_r) = \frac{v_r \cdot v_{max} \cdot t_{z\_max}}{v_r \cdot (t_{z\_max} - t_{z\_min}) + \Delta x} \qquad (4)$$

Durch Koeffizientenvergleich und Einsetzen von $v_r = v_s$ lässt sich erhalten:

$$f = \frac{v^*}{v_{max}} = \frac{v_s \cdot t_{z\_max}}{v_s \cdot (t_{z\_max} - t_{z\_min}) + \Delta x} \qquad (5)$$

$$\text{bzw.} \quad f = \frac{a_v \cdot v_s}{b_v \cdot v_s \cdot c_v} \qquad (5a)$$

mit:

$$a_v = t_{z\_max} \qquad (5b)$$

$$b_v = t_{z\_max} - t_{z\_min} \qquad (5c)$$

$$c_v = \Delta x \qquad\qquad (5d)$$

Die so ermittelte Größe f kann als Gewichtungs- bzw. Proportionalitätsfaktor für die Scherspannung angesehen und benutzt werden, während der Kehrwert 1/g der weiter oben erwähnten Hilfsgröße g als Gewichtungs-Proportionalitätsfaktor für die Variation der Zykluszeit dient. Die höchste Ist-Geschwindigkeit wird für 1/g=1 erreicht. In Bewegungsphasen des Antriebes, in denen dieser mit dieser höchsten Geschwindigkeit gefahren wird, wird für jede Samplingperiode ein zugehöriger Wert der Scherspannung gemäß einer vorab bestimmten Wertetabelle genutzt. In Bewegungsphasen, in denen eine niedrigere Geschwindigkeit eingestellt ist, wird der dem Verstärker zuzuführende Scherspannungswert aus den in der Wertetabelle abgelegten Werten linear interpoliert; vgl. die Ausführungen weiter unten.

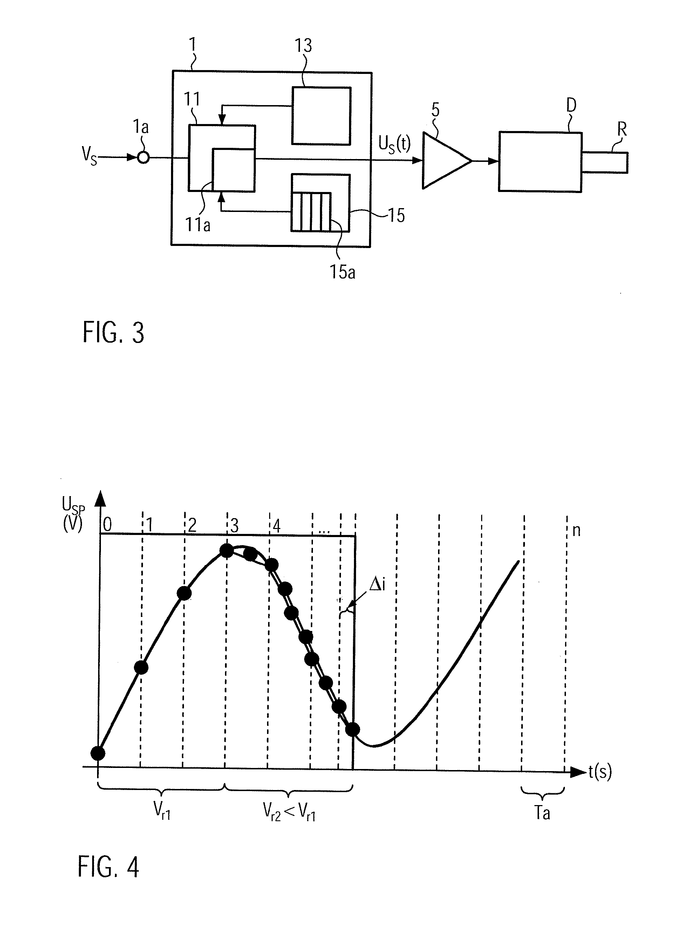

Fig. 3 zeigt eine Prinzipskizze erfindungswesentlicher Teile einer Ausführungsform der vorgeschlagenen Betriebssteuereinheit in Art eines Funktions-Blockschaltbildes. Die Betriebssteuereinheit 1 empfängt an einem Steuergrößeneingang 1a die Sollgeschwindigkeit $v_s$ als Steuergröße. Ausgangssignal der Betriebssteuereinheit 1 ist (in der hier dargestellten vereinfachten Ausführung, bei der vom tatsächlichen Vorhandensein mehrerer Verstärkerstufen abgesehen wird) ein zeitabhängiger Einstellwert $U_s(t)$, der einem Verstärker 5 zugeführt wird. Dessen Ausgangssignal, nämlich der auf den erforderlichen Antriebspegel verstärkte Scherspannungswert, wird schließlich dem Antrieb D zugeführt.

Die Betriebssteuereinheit 1 umfasst eine Berechnungsstufe 11, die mit einem Programmspeicher 13 und einem Datenspeicher 15 verbunden ist und die zur Abarbeitung des im Programmspeicher 13 gespeicherten Algorithmus anhand von im Datenspeicher 15 gespeicherten Daten der relevanten Größen ausgebildet ist. Sie enthält unter anderem eine Interpolationsstufe 11a, in der vorbestimmte Schwellspannungswerte, die in einem Lookup-Table 15a innerhalb des Datenspeichers 15 gespeichert sind, gemäß dem nachfolgend beschriebenen Interpolationsalgorithmus verarbeitet werden. Im Übrigen verarbeitet die Berechnungsstufe 11, wie oben bereits erwähnt, die Werte aus dem Lookup-Table 15a natürlich auch unabhängig von einer Interpolation, indem sie sie bestimmten Zeitpunkten des Betriebsablaufes (aufeinander folgenden Samplingzeiten) zuordnet.

In einer Ausgestaltung dieser Ausführung kann eine Erfassung der Ist-Geschwindigkeit des Läufers des Antriebes und eine Rückführung des Geschwindigkeitssignals zur Betriebssteuereinheit vorgesehen sein.

Für die Interpolation der Scherspannungswerte bei kleinen Antriebsgeschwindigkeiten wird zunächst ein Interpolationsintervall $\Delta i$ benötigt. Für dieses gilt:

$$\Delta i \sim \frac{1}{t_z(v_s)}; \qquad\qquad (6a)$$

$$\Delta i = \frac{1}{g} \qquad\qquad (6b)$$

Durch erneuten Koeffizientenvergleich mit Gl. (3) bzw. (4) und $v_r=v_s$ erhält man:

$$\Delta i = \frac{1}{g} = \frac{t_{z\_min}}{t_{z\_max}} \cdot \frac{(t_{z\_min} - t_{z\_min})}{\Delta x} \cdot vs + \frac{t_{z\_min}}{t_{z\_max}} \qquad (7)$$

$$\text{bzw. } \Delta i = a_i \cdot v_s + b_i \qquad\qquad (7a)$$

mit:

$$a_i = \frac{t_{z\_min}}{t_{z\_max}} \cdot \frac{(t_{z\_min} - t_{z\_min})}{\Delta x} \qquad (7b)$$

$$b_i = \frac{t_{z\_min}}{t_{z\_max}} \qquad\qquad (7c)$$

Mit Gl. (6b) ist zugleich eine Beziehung zur weiter oben erwähnten Hilfsgröße g hergestellt.

Bei der Realisierung des vorgeschlagenen Verfahrens zeigt sich, dass in einer ersten Bewegungsphase des Antriebes, fern von der Zielposition, die Klemm- und Scherfrequenz sowie die Scherspannungsamplitude hoch sind. Bei Annäherung an die Zielposition stellt die Betriebssteuereinheit eine geringer werdende Antriebsgeschwindigkeit ein, und hierbei verringert sich die Ansteuerfrequenz ebenso wie die Klemmspannung. Die Verringerung der Spannungsamplitude zusammen mit einer durch die Verringerung der Frequenz bewirkten Reduzierung der Stromaufnahme reduziert insgesamt die Ausgangsleistung. Die Klemmspannung gelangt in den Bereich nahe Null, sobald ein niedriger Geschwindigkeitswert des Systems eingestellt ist.

Mit dem erfindungsgemäßen Betriebsverfahren lässt sich erreichen, dass die Scherspannung bei Erreichen der Zielposition einen Wert von +/- 25% der maximalen Aussteuerungsamplitude erreicht. Die Konsequenz daraus ist, dass sich nach einem sog. Relaxieren, d. h. der systematischen Ansteuerung aller Spannungen mit dem Ziel, dass alle Spannungen Null sind, die Position nur minimal zur zuvor erreichten Zielposition verändert. Unter Vernachlässigung von thermischen Veränderungen, des Piezodrifts und Laständerungen kann somit eine Position sehr hoher Genauigkeit energielos gehalten werden.

Die Variation der Zykluszeit für einen Antrieb hat zur Folge, dass mehrere Antriebe nicht mit einer Klemmspannung zusammengefasst werden können.

Die Art der Ansteuerung lässt Mehrachs-Systeme mit P-Kanonischer und V-Kanonischer Entkopplung zu.

Die Ausführung der Erfindung ist nicht auf das oben beschriebene Beispiel und die hervorgehobenen Aspekte der erläuterten Ausführung beschränkt, sondern ebenso in einer Vielzahl von Abwandlungen möglich, die im Rahmen fachgemäßen Handelns liegen.

## Patentansprüche

1. Betriebsverfahren eines Piezolinearantriebes (D) mit einer Gruppe von Piezostapelaktoren, welche einen Läufer antreiben, bei dem die Aktoren eine auf einem gemeinsamen Substrat (Sa, Sb) befindliche Mehrschichtkeramikanordnung darstellen, wobei innerhalb eines Stapels der Mehrschichtanordnung ein erstes Stapelteil (D1, D2) als Longitudinalaktor (D1, D2) und ein zweites Stapelteil (C1, C2) als Scheraktor ausgebildet ist und Letzteres mindestens indirekt in Klemm- und Scherkontakt mit dem Läufer (R) steht und mindestens zwei identische Aktoren sich nebeneinander befinden, um im Schrittbetrieb wechselseitige Klemm- und Vorschubbewegungen auszuführen, zum Betrieb im Schrittmodus zur Grobpositionierung, wobei die benachbarten Aktoren der Gruppe zu abwechselnden Klemm- und Vorschubbewegungen angesteuert werden, wobei Ansteuersignale ($U_S$, $\Delta t_z$) aus einer Geschwindigkeitsproportionalen Steuergröße ($V_S$) abgeleitet werden, **dadurch gekennzeichnet, dass** die Zykluszeit ($\Delta t_z$) eines Scher- und Klemmspannungszyklus und eine maximale Scherspannung ($U_S$) zur Ansteuerung der Longitudinalaktoren in Abstimmung aufeinander aus der Steuergröße ($V_S$) abgeleitet werden.

2. Betriebsverfahren nach Anspruch 1, wobei die Ansteuersignale derart abgeleitet werden, dass die Zeitabhängigkeit des Antriebsweges einem linearen Verlauf angenähert wird.

3. Betriebsverfahren nach einem der vorangehenden Ansprüche, wobei für jeden Schritt des Schrittbetriebs eine maximale Zykluszeit ($\Delta t_{z\_max}$) vorgegeben wird.

4. Betriebsverfahren nach einem der vorangehenden Ansprüche, wobei jeweils ein vorbestimmter und in einem Lookup-Table (15a) gespeicherter Wert der Scherspannung ($U_S$) ausgelesen und benutzt oder ein aus zwei ausgelesenen Werten interpolierter Wert der Scherspannung zur Ansteuerung der Longitudinalaktoren benutzt wird.

5. Betriebssteuereinheit (1) eines Piezolinearantriebes (D) mit einer Gruppe von Piezostapelaktoren, welche einen Läufer (R) antreiben, bei dem die Aktoren eine auf einem gemeinsamen Substrat (Sa, Sb) befindliche Mehrschichtkeramikanordnung darstellen, wobei innerhalb eines Stapels der Mehrschichtanordnung ein erstes Stapelteil (D1, D2) als Longitudinalaktor und ein zweites Stapelteil (C1, C2) als Scheraktor ausgebildet ist und Letzteres mindestens indirekt in Klemm- und Scherkontakt mit dem Läufer steht und mindestens zwei identische Aktoren sich nebeneinander befinden, um im Schrittbetrieb wechselseitige Klemm- und Vorschubbewegungen auszuführen, **dadurch gekennzeichnet, dass** Berechnungsmittel (11) zur Ableitung von Ansteuersignalen ($U_S$, $\Delta t_z$) für die Aktoren, nämlich der Zykluszeit ($\Delta t_z$) eines Scher- und Klemmspannungszyklus und einer maximalen Scherspannung ($U_S$) zur Ansteuerung der Longitudinalaktoren in Abstimmung aufeinander, aus einer Geschwindigkeits-proportionalen Steuergröße vorgesehen sind.

6. Betriebssteuereinheit nach Anspruch 5, wobei die Berechnungsmittel (11) zur Ableitung der Werte einer Stellgröße derart ausgebildet sind, dass die Zeitabhängigkeit des Antriebsweges einem linearen Verlauf angenähert wird.

7.  Betriebssteuereinheit nach Anspruch 5 oder 6, mit einem Lookup-Table (15a) zur Speicherung vorbestimmter Werte der Scherspannung ($U_S$) zur Ansteuerung der Longitudinalaktoren.

8.  Betriebssteuereinheit nach Anspruch 7, wobei die Berechnungseinheit (11) ein mit dem Lookup-Table (15a) verbundene Interpolationseinheit (11a) zur Ermittlung von interpolierten Scherspannungswerten aufweist.

**Claims**

1.  An operating method of a piezolinear drive (D) having a group of piezo stack actuators which drive a rotor, in which the actuators constitute a multilayer ceramic arrangement situated on a common substrate (Sa, Sb), wherein a first stack part (D1, D2) within a stack of the multilayer arrangement is formed as a longitudinal actuator (D1, D2), and a second stack part (C1, C2) as a shearing actuator, and the latter being at least indirectly in clamping and shearing contact with the rotor (R), and at least two identical actuators being situated next to each other in order to perform alternate clamping and advancing movements in the step operation for a rough positioning operation in the step mode, wherein the adjacent actuators of the group are controlled to perform alternate clamping and advancing movements, with control signals ($U_s$, $\Delta t_z$) being derived from a speed-proportional control variable ($V_s$),
    **characterized in that**
    the cycle time ($\Delta t_z$) of a shear tension and terminal voltage cycle, and a maximum shear tension ($U_s$) for controlling the longitudinal actuators tuned to each other are derived from the control variable ($V_s$).

2.  The operating method according to claim 1, wherein the control signals are derived such that the time dependence of the drive path approximates a linear course.

3.  The operating method according to any one of the preceding claims, wherein a maximum cycle time ($\Delta t_{z\_max}$) is preset for each step of the step operation.

4.  The operating method according to any one of the preceding claims, wherein in each case a predetermined value of the shear tension ($U_S$) stored in a look-up table (15a) is read out and used, or a value of the shear tension interpolated from two read-out values is used to control the longitudinal actuators.

5.  An operating control unit (1) of a piezolinear drive (D) having a group of piezo stack actuators which drive a rotor (R), in which the actuators constitute a multilayer ceramic arrangement situated on a common substrate (Sa, Sb), wherein a first stack part (D1, D2) within a stack of the multilayer arrangement is formed as a longitudinal actuator, and a second stack part (C1, C2) as a shearing actuator, and the latter being at least indirectly in clamping and shearing contact with the rotor, and at least two identical actuators being situated next to each other in order to perform alternate clamping and advancing movements in the step operation,
    **characterized in that**
    calculation means (11) are provided for deriving control signals ($U_S$, $\Delta t_z$) for the actuators, namely the cycle time ($\Delta t_z$) of a shear tension and terminal voltage cycle, and a maximum shear tension ($U_S$) for controlling the longitudinal actuators tuned to each other from a speed-proportional control variable.

6.  The operating control unit according to claim 5, wherein the calculation means (11) for deriving the values of an actuating variable is configured such that the time dependence of the drive path approximates a linear course.

7.  The operating control unit according to claim 5 or 6, comprising a look-up table (15a) for storing predetermined values of the shear tension ($U_S$) for controlling the longitudinal actuators.

8.  The operating control unit according to claim 7, wherein the calculation means (11) has an interpolation unit (11a) connected to the look-up table (15a) for determining interpolated shear tension values.

**Revendications**

1.  Procédé pour le fonctionnement d'un entraînement piézoélectrique linéaire (D) avec un groupe d'actionneurs piézoélectriques en pile, qui entraîne un élément mobile, dans lequel les actionneurs représentent un agencement de céramique multicouches situé sur un substrat commun (Sa, Sb), dans lequel à l'intérieur d'une pile de l'agencement multicouches une première partie de pile (D1, D2) est réalisée sous forme d'actionneur longitudinal (D1, D2) et une seconde partie de pile (C1, C2) est réalisée sous forme d'actionneur de cisaillement, et cette dernière est au moins indirectement en contact de pincement et en contact de cisaillement avec l'élément mobile (R), et au moins deux actionneurs identiques se trouvent l'un à côté de l'autre afin d'exécuter, dans un fonctionnement en pas à pas, des mouvements alternés de pincement et d'avance, pour le fonctionnement en mode pas à pas afin d'assurer une un positionnement grossier, dans lequel les actionneurs voisins du groupe sont pilotés pour exécuter alternativement des mouvements de pincement et d'avance, dans lequel des signaux de pilotage ($U_S$, $\Delta t_2$) sont dérivés d'une valeur de commande ($V_S$) proportionnelle à la vitesse,
**caractérisé en ce que** le temps de cycle ($\Delta t_2$) d'un cycle de tension de cisaillement et de pincement et d'un cycle de tension de cisaillement maximum (ES) sont dérivés en accord l'un avec l'autre à partir de la grandeur de commande ($V_S$) pour le pilotage des actionneurs longitudinaux.

2. Procédé de fonctionnement selon la revendication 1, dans lequel les signaux de pilotage sont dérivés de telle façon que la dépendance temporelle du trajet d'entraînement se rapproche d'une évolution linéaire.

3. Procédé de fonctionnement selon l'une des revendications précédentes, dans lequel pour chaque pas du fonctionnement en pas à pas on impose un temps de cycle maximum ($\Delta t_{Z\_max}$).

4. Procédé de fonctionnement selon l'une des revendications précédentes, dans lequel on lit respectivement une valeur prédéterminée de la tension de cisaillement ($U_S$), mémorisée dans une table de lecture (15a) et on l'utilise, ou bien on utilise pour le pilotage des actionneurs longitudinaux une valeur de la tension de cisaillement interpolée à partir de deux valeurs lues.

5. Unité de commande de fonctionnement (1) d'un entraînement piézoélectrique linéaire (D) avec un groupe d'actionneurs piézoélectriques en pile, qui entraîne un élément mobile (R), dans laquelle les actionneurs représentent un agencement en céramique multicouches qui se trouve sur un substrat commun (Sa, Sb), dans laquelle, à l'intérieur d'une pile de l'agencement multicouches une première partie de pile (D1, D2) est réalisée sous forme d'actionneur longitudinal et une seconde partie de pile (C1,C2) sous forme d'actionneur en cisaillement et cette dernière est au moins indirectement en contact de pincement et en contact de cisaillement avec l'élément mobile, et au moins deux actionneurs identiques se trouvent l'un à côté de l'autre afin d'exécuter, en fonctionnement en pas à pas, des mouvements alternatifs de pincement et d'avance, **caractérisée en ce qu'**il est prévu des moyens de calcul (11) pour dériver les signaux de pilotage ($U_S$, $\Delta t_Z$) pour les actionneurs, à savoir le temps de cycle ($\Delta t_Z$) d'un cycle de tension de cisaillement et d'un cycle de tension de pincement, et une tension de cisaillement maximum ($U_S$) pour le pilotage des actionneurs longitudinaux en accord les uns avec les autres, à partir d'une grandeur de commande proportionnelle à la vitesse.

6. Unité de commande de fonctionnement selon la revendication 5, dans laquelle les moyens de calcul (11) sont réalisés pour dériver les valeurs d'une grandeur de positionnement, de telle façon que la dépendance temporelle du trajet d'entraînement suit approximativement une évolution linéaire.

7. Unité de commande de fonctionnement selon la revendication 5 ou 6, comprenant une table de lecture (15a) pour mémoriser des valeurs prédéterminées de la tension de cisaillement ($U_S$) pour le pilotage des actionneurs longitudinaux.

8. Unité de commande de fonctionnement selon la revendication 7, dans laquelle l'unité de calcul (11) comprend une unité d'interpolation (11), reliée à la table de lecture (15a), pour la détermination de valeurs de tension de cisaillement interpolées.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4036287 C2
- US 6150750 A
- US 5241235 A
- DE 69302084 T2
- DE 19806127 A1
- DE 19605214 A1
- DE 10148267 B4

**In der Beschreibung aufgeführte Nicht-Patentliteratur**

- **VON Y. EGASHIRA.** *Jpn. J. Appl. Phys.,* 2002, vol. 41 (9), 5858-5863